Europäisches Patentamt

European Patent Office

Office européen des brevets

(19)

(11) Veröffentlichungsnummer: **0 303 238**
**A2**

(12) **EUROPÄISCHE PATENTANMELDUNG**

(21) Anmeldenummer: **88112954.8**

(22) Anmeldetag: **10.08.88**

(51) Int. Cl.⁴: **G03H 5/00**

(30) Priorität: **13.08.87 DE 3726937**

(43) Veröffentlichungstag der Anmeldung:
**15.02.89 Patentblatt 89/07**

(84) Benannte Vertragsstaaten:
**DE ES FR GB IT SE**

(71) Anmelder: **Thyssen Industrie AG**
**Am Thyssenhaus 1**
**D-4300 Essen 1(DE)**

(72) Erfinder: **Engelmohr, Franz**
**Anzengruber Strasse 10a**
**D-8037 Olching(DE)**

(54) **Verfahren zum zerstörungsfreien und flächendeckenden Erkennen von Fertigungsunregelmässigkeiten und Eigenspannungsveränderungen.**

(57) Bei schwach gewölbten dünnwandigen metallischen Bauteilen, wie z.B. Kofferraumdeckeln, führen der Walzprozeß bei der Herstellung des Ausgangsmaterials (Blechs) und die tribologischen Verhältnisse während des Umformens zu unterschiedlichen Eigenspannungen im Bauteil, die neben der Bauteilgeometrie und der Belastungsart das Verformungsverhalten des fertigen Bauteils beeinflussen.

Um derartige Fertigungsunregelmäßigkeiten zerstörungsfrei und flächendeckend erkennen und bewerten zu können, sieht das Verfahren vor, daß von Musterbauteilen mit fehlertypischen Verformungen aufgenommene flächendeckende Hologramme hinsichtlich der örtlich vorhandenen Spannungsverteilung mit Hilfe einer röntgenographischen Feinstrukturanalyse interpretiert und jeweils mit dem Hologramm des zu prüfenden Serienbauteils verglichen werden.

Zweckmäßigerweise erfolgt die Erstellung eines Hologrammkataloges mit Hologrammen von gleichartigen Bauteilen, die unter bestimmten Fertigungsparametern hergestellt wurden und die den röntgenographisch ermittelten eigenspannungsverteilungen zugeordnet sind (Mustererkennung)

EP 0 303 238 A2

# Verfahren zum zerstörungsfreien und flächendeckenden Erkennen von Fertigungsunregelmäßigkeiten und Eigenspannungsveränderungen

Die Erfindung betrifft ein Verfahren zum zerstörungsfreien und flächendeckenden Erkennen von Fertigungsunregelmäßigkeiten und Eigenspannungsveränderungen an schwach gewölbten dünnwandigen metallischen Bauteilen unter Verwendung von Hologrammen.

Zur Gewährleistung der Betriebssicherheit und der wirktschaftlichkeit von technischen Konstruktionen, insbesondere des Leichtbaues, ist es erforderlich, Informationen über die Belastung und die Belastbarkeit der verwendeten Bauteile in ihrem Verwendungsbereich zu erhalten. Unregelmäßigkeiten im Fertigungsprozeß von großflächigen, dünnwandigen Bauteilen, wie sie z.B. im Karosseriebau verwendet werden, haben Qualitätsschwankungen zur Folge, die die ertragbare Last der Bauteile beeinflussen. So wurde beispielsweise an Kofferraumdeckeln ein unterschiedliches Beulverhalten beobachtet, obwohl Werkstoff, Bauteilgeometrie und Fertigungsfolge keine Unterschiede aufwiesen. Der Walzprozeß bei der Herstellung des Ausgangsmaterials (Blechs) und die tribologischen Verhältnisse während des Umformens führen zu unterschiedlichen Eigenspannungen im Bauteil, die neben der Bauteilgeometrie und der Belastungsart das Verformungsverhalten des fertigen Bauteils beeinflussen.

Der Erfindung liegt die Aufgabe zugrunde, ein Verfahren zum zerstörungsfreien und flächendeckenden Erkennen von Fertigungsunregelmäßigkeiten und Eigenspannungsveränderung der eingangs genannten Art so zu gestalten, daß es z.B. in der Serienfertigung von großflächigen gewölbten, daß es z.B. in der Serienfertigung von großflächigen gewölbten Karosserieteilen anwendbar ist und beispielsweise Hinweise über zu erwartende Abweichungen des Beulverhaltens an den fertigen Bauteilen gibt.

Diese Aufgabe wird erfindungsgemäß dadurch gelöst, daß die an Musterbauteilen mit fehlertypischen Verformungen aufgenommenen Hologramme hinsichtlich der örtlich vorhandenen Spannungsverteilung mit Hilfe einer röntgenographischen Eigenspannungsmessung interpretiert und jeweils mit dem Hologramm des zu prüfenden Serienbauteils verglichen werden.

Die mit der Erfindung erzielten Vorteile bestehen darin, daß Fertigungsunregelmäßigkeiten, Werkstoffehler und Eigenspannungsveränderungen durch holographische Interferometrie erkannt werden und Gegenmaßnahmen eingeleitet werden können. Durch eine rechnergestützte automatische Auswertung von Hologrammen wird ein schneller Zugriff zum Prüfergebnis ermöglicht, was eine produktionsbegleitende Prüfung erlaubt.

Die zur Anwendung kommenden Meßverfahren werden nachstehend erläutert.

Die holographische Interferometrie gestattet die umnittelbare Messung der statischen oder dynamischen Verformung der Oberfläche von beliebigen Objekten.

Es handelt sich um ein optisches berührungsloses Meßverfahren. Das Objekt wird durch die Messung nicht beeinflußt.

Die Verformung des Bauteils wird durch Interferenzlinien auf dem Bild des Objektes angezeigt. Der Vorteil gegenüber punktuellen Methoden liegt in der flächenhaften bildmäßigen Information, die beispielsweise sofort maximal beanspruchte oder fehlerhafte Stellen erkennen läßt.

Die Verformung bzw. die Amplitudenverteilung an schwingenden Objekten kann auf 0,1 $\mu m$ ermittelt werden.

Neben statischen und dynamischen Verformungen an lichtreflektierenden Objekten können auch an transparenten Objekten Temperatur-, Druck- und Konzentrationsfelder berührungslos und flächenhaft vermessen werden.

Die Auswertung der holographischen Interferogramme kann qualitativ und quantitativ manuell oder rechnergestützt erfolgen.

Das zur Anwendung kommende röntgenographische Eigenspannungsmeßverfahren basiert auf der Erfassung der Gitterebenenabstände einzelner oberflächennaher Körner.Die durch Eigenspannungen erzeugten Gitterdehnungen bewirken bei den auftreffenden und gebeugten Röntgenstrahlen eine Änderung des Beugungswinkels $\theta$.

An der Winkeldifferenz $\delta\theta$ zwischen spannungsfreiem und spannungsbehaftetem Gitter lassen sich die Gitterdehnungen und schließlich die entsprechenden Spannungen ermitteln.

Mit einem Röntgendiffraktometer werden Interferenzen in verschiedenen Richtungen aufgenommen und nach dem $\sin^2\Psi$-Verfahren über einen Rechner die Spannungswerte ermittelt. Die Röntgenstrahlung wird in einer Röhre mit Chrom als Anodenmaterial erzeugt, die eine Röhrenintensität von U = 25 kV und I = 20 mA zuläßt.

Für Eigenspannungsmessungen an großflächigen Blechbauteilen muß das Röntgendiffraktometer an diskreten Meßstellen positioniert werden. Die vom Röntgenstrahl erfaßte Meßstelle hat eine Fläche von etwa 2 mm x 6 mm.

Die Durchführung des Verfahrens sieht folgende Schritte Vor:

a) Herstellung von kaltumgeformten Musterbauteilen (z.B. aus Stahlblech mit gleicher Bauteilgeometrie), jedoch unterschiedlichen Eigenspannungszuständen durch Variation der Fertigungsparameter. Die unterschiedlichen Eigenspannungszustände können z.B. durch Änderung des Niederhalterdruckes der Rondengeometrie oder der tribologischen Verhältnisse im Werkzeug erreicht werden,

b) Flächenhafte Erfassung der Teilverformung der einzelnen Musterbauteile unter definierter Last kurz vor und nach dem Ausbeulen mit Hilfe der Holographie,

c) Rechnergestützte Auswertung der aus den holographischen Aufnahmen entnehmbaren Verformungsdifferenzen über den Beulbereichen der Musterbauteile (dreidimensional),

d) Röntgenographische Eigenspannungsbestimmung an ausgewählten Musterbauteilen, die ein signifikantes Hologramm unter definierter "Beulbelastung" ergeben, was auf eine characteristische Eigenspannungsverteilung hinweist,

e) Zuordnung der im Musterbauteil röntgenographisch ermittelten Eigenspannungsverteilung zu den holographisch ermittelten Verformungsdifferenzen,

f) Vergleichen des Hologramms des Serienbauteils mit den Hologrammen der Musterbauteile.

Zweckmäßigerweise erfolgt die Erstellung eines Hologrammkataloges mit Hologrammen von gleichartigen Bauteilen, die unter bestimmten Fertigungsparametern hergestellt worden und die den röntgenographischen ermittelten Eigenspannungsverteilungen zugeordnet sind (Mustererkennung).

## Ansprüche

Verfahren zum zerstörungsfreien und flächendeckenden Erkennen von Fertigungsunregelmäßigkeiten und Eigenspannungsveränderungen an schwach gewölbten dünnwandigen metallischen Bauteilen unter Verwendung von Hologrammen, dadurch gekennzeichnet, daß die an Musterbauteilen mit fehlertypischen Verformungen aufgenommenen flächendeckenden Hologramme hinsichtlich der örtlich vorhandenen Spannungsverteilung mit Hilfe einer röntgenographischen Feinstrukturanalyse interpretiert und jeweils mit dem Hologramm des zu prüfenden Serienbauteils verglichen werden.